# EUROPEAN PATENT SPECIFICATION

(11) **EP 1 513 065 B1**
(45) Date of publication and mention of the grant of the patent: **04.06.2008**
(21) Application number: 04254969.1
(22) Date of filing: 18.08.2004
(51) Int. Cl.: G06F 17/30

(54) **File system and file transfer method between file sharing devices**
Dateisystem und Verfahren zum Dateitransfer zwischen Dateiverteilungsgeräten
Système de gestion de fichiers et procédé de transfert de fichiers entre des dispositifs pour fichiers partagés

(30) Priority: 04.09.2003 JP 2003312273
(43) Date of publication of application: 09.03.2005
(73) Proprietor: Hitachi, Ltd., Chiyoda-ku, Tokyo 101-0062 (JP)
(72) Inventor: Saika, Nobuyuki, Hitachi Ltd. Intell. Prop. Group, Chiyoda-ku Tokyo 100-8220 (JP)
(74) Representative: Holt, Daniel Richard

(56) References cited:
- WO-A-03/012578
- US-A- 5 832 274
- US-A1- 2002 055 942
- US-A1- 2003 110 237
- US-A1- 2003 182 525
- ANDREW S. TANENBAUM: "Modern Operating Systems" 2001, PRENTICE HALL , NEW JERSEY , XP002299689 * page 388, paragraphs 9,10 *

## Description

This application relates to and claims priority from Japanese Patent Application No. 2003-312273 filed on September 4, 2003.

The present invention relates to a file system that employs a file server, NAS (Network Attached Storage), for example, and to a method for transferring files between file sharing devices.

In order to share data between a plurality of computer terminals distributed on a network, a file server has conventionally been used. As an early-stage file server, a file server that implements a file sharing protocol such as CIFS (Common Internet File System), NFS (Network File System; NFS is a registered trademark or trademark of U.S. Sun Microsystems, Inc.) in a general-purpose OS (Operating System), for example, is known. NAS, which employs a dedicated OS that is specialized for file sharing services and supports a plurality of file sharing protocols (such as CIFS, NFS, DAFS (Direct Access File System)), is known as an enhanced file server.

These file servers are capable of managing access rights by setting permission information. When NFS is used, for example, settings to allow three types of users such as 'owner', 'group' and 'other' to perform the reading of files, writing to file and file execution can be made. Alternatively, when CIFS is used, for example, access control that differs from user to user can be performed for the same file by using access control information known as 'ACL' (Access Control List). As a result, only those users for whom access rights have been set beforehand are able to access the files.

Further, there is a year-on-year increase in the number of clients using files for sharing and shared files. For this reason, new file servers are added to existing file sharing systems in order to cater to the increase in the number of files and the new demand. When a new file server is added, all or some of the files stored on an existing file server are sometimes moved to the new file server. Further, there are also cases where files are moved between directories and volumes in accordance with system reorganization, for example.

A variety of methods for transferring files from a transfer source file server to a transfer destination file server are known. For example, there exist methods that make a backup of files stored in the transfer source file server by using a backup device such as a tape device, and then restore the backup data in the transfer destination file server, for example. In this case, the directory structure of the transfer source is backed up together with attribute information (e.g. as described in "Modern Operating Systems", TANENBAUM, Prentice Hall 2001, at page 386) that includes access control information, and this directory structure and attribute information are restored in their entirety in the transfer destination device. Alternatively, there also exist methods that individually transfer predetermined directories or predetermined files of the transfer source file server to the transfer destination file server by using a dump command, tar command, cp command, xcopy command, for example.

Further, in order to convert a data file used by a COBOL program into a database format, for example, a technology that automates the data conversion between data files of different types by providing common record format information that is a combination of data definition information and attribute information, is also known (Japanese Patent Application Laid-Open No. 2000-347907).

When the transfer source file server and transfer destination file server are supplied with the same file server functions so as to be NFS servers or CIFS servers, for example, the storage structure can also be transferred in its entirety by making a complete backup of the files of the transfer source file server, metadata, and the directory structure, and then restoring same in the transfer destination file server.

US 5, 832, 274 discloses a method for migrating a file system and access rights associated with the file system from a first network operating system to a second network operating system, specifically using the tape backup function modified to communicate information across the network to the second environment.

US 2003/110237A discloses a data migration system for migrating data between an existing file server apparatus and a new file server apparatus in a computer system that includes a plurality of host computers and a plurality of file server apparatuses that are mutually connected to one another. The data migration system on the new file server apparatus copies file attributes unique to the network attached storage (NFS) and file attributes unique to the common internet file system (CIFS) from the existing file server apparatus, and stores the file attributes without changing the file attributes in the new file server apparatus. Then actual data is moved from the existing file server to the new file server. When a file access to data is made from a host computer during the file migration process, and if the data has not been migrated from the existing file server to the new file server, the data is read out from the existing file server onto the new file server, and the file access is processed by the new file server as if the existing file server were processing the file access.

On the one hand, when the respective file server functions of the transfer source file server and the transfer destination file server are different, as in the case of an NFS and CIFS server, for example, it is difficult to transfer the metadata. This is because, when the OS is different in each case, there is a difference between the directory structure of the transfer source file server and the directory structure of the transfer destination file server.

For example, suppose that, in the case of the transfer source file server, a '/folder' directory exists below a directory '/share' ('/share/folder'). When this '/folder' is transferred to a transfer destination file server with a different type of OS, the /folder' is sometimes automatically placed below a '/current' directory under '/share' at the request of the file management system. The difference in the actual directory structure is not recognized by the client. A different OS resource sharing program installed on the transfer destination file server serves to display the /folder' on the client by concealing the actual difference in directory structure. 'Samba' is a known example of a program that permits resource sharing (file exchange) between these different types of OS.

Although, when files are transferred between different OS, there is no change in the appearance of the directory structure following the transfer, sometimes metadata (attribute information) such as access control information is lost and not correctly reflected in the transfer destination file server. More particularly, when desired files, directories are individually selected and transferred by way of a so-called 'drag & drop' operation via a GUI (Graphical User Interface) screen, there is the possibility that, even though the file body is transferred, metadata such as access control information will be lost. In such a case, the administrator of the file server must reset the access control by manually examining the files one by one while referencing pre-transfer access control information. However, because the actual directory structure is different, the work involved in specifying the files is arduous. Further, when a plurality of files of the same type and with the same name are discovered, the administrator then ponders over the judgment of whether access control should be set for any of these files.

US 2002/055942A discloses tools and techniques for distinguishing a file from any or all copies of the file that may exist.

A data file automatic conversion device, such as that appearing in the Japanese Patent Application Laid-Open No. 2000-347907, merely changes a predefined data file from one format to another. The directory structure and metadata, are not considered. Further, the rules for converting the data files must be predefined and the constitution is complex. In addition, in the case of a file server, a multiplicity of files in various formats exists in a variety of locations within a complex hierarchical storage structure and each have different metadata, and it is therefore difficult to transfer these files [and metadata] accurately.

The present invention was conceived in view of the above problems, and one embodiment of the present invention provides a file sharing system that makes it possible to specify the files that are transferred. Another embodiment of the present invention provides a file sharing system and method for transferring files between file sharing devices that are capable of automatically specifying transferred files and resetting attribute information. Further, other embodiment of the present invention provides a file sharing system that makes it possible to specify files even when a plurality of files of the same type and with the same name exists at the transfer destination. Further objects of the present invention will become evident from the description of the embodiment described subsequently.

More specifically, in order to solve the above problem, the file sharing system according to an embodiment of the present invention comprises: A file sharing system, comprising: a transfer source file sharing device having a first operating system; a transfer destination file sharing device having a second operating system and which is communicably connected to said transfer source file sharing device; selecting means for selecting at least one or more files kept in the transfer source file sharing device; file examining means for acquiring characteristic information on the selected file(s); file transferring means for transferring the selected file(s) and said characteristic information to the transfer destination file sharing device, wherein: the system is arranged to transfer characteristic information in a separate file to the file(s) to which the characteristic information relates; and the second operating system is different to said first operating system, characterised in that:
the system further comprises file specifying means for specifying the file(s) transferred to the transfer destination file sharing device by matching each transferred file with its respective characteristic information, wherein: the file examining means is arranged to acquire characteristic information including other attribute information, being one of the file name, file size, update date and time or file path information, relating to the selected file(s) and identity information indicating a file identity that is obtained by processing data of the selected file(s) by means of a predetermined function; when unable to specify said file by means of the other attribute information included in the characteristic information, the file specifying means is arranged to specify the file by using the predetermined function to generate the identity information and then to compare the generated identity information with the identity information included in the characteristic information; and when unable to specify said file by means of the identity information, the file specifying means is arranged to determine the similarity between file path information of the transfer source file sharing device and file path information of the transfer destination file sharing device, by comparing parts of the file paths, and then specify the file on the basis of this similarity.

The transfer source file sharing device and transfer destination file sharing device can be constituted as file servers (including NAS). The transfer source file sharing device and transfer destination file sharing device have their storage resources managed, store a multiplicity of files, and are capable of providing file sharing services to a multiplicity of clients. The transfer source file sharing device and transfer destination file sharing device are connected so that bidirectional data communications via a LAN (Local Area Network), for example, are possible. Further, the file sharing device may be connected to a storage device via a SAN (Storage Area Network).

The user (administrator, for example) selects, via the selecting means, at least one or more files (including directories) that are kept on the transfer source file sharing device. The characteristic information acquiring means acquire characteristic information for the selected file(s). Here, characteristic information is information indicating the characteristics of the selected file(s), and is used in order to search for the selected file (s). Examples of characteristic information can include the file name, file path information, the file size, the file update date and time, for example. Further, a message digest can also be used as described below. Files selected by the selecting means are shifted to the transfer destination file sharing device by the file transfer means. The file specifying means specify files by seeking out transferred files from within a file group kept in the transfer destination file sharing device based on characteristic information generated beforehand. Therefore, even when files are transferred between different OS, transferred files can be specified on the basis of characteristic information.

Further, according to an embodiment of the present invention, the characteristic information acquiring means comprise attribute resetting means that acquire characteristic information including predetermined attribute information relating to the selected file(s) and associate the predetermined attribute information included in the characteristic information with the file(s) specified by the file specifying means.

Examples of predetermined attribute information include ACL or other access control information. When a transferred file is specified, the attribute resetting means reset predetermined attribute information for the specified file.

Examples of identity information indicating a file identity can include a message digest rendered by using a hash function. A hash function generates a pseudorandom number of a fixed length from the supplied original data. A value generated by a hash function is known as a 'hash value' or 'message digest'. If original data are different, the respective hash values are also different, and hence the file content identity can be certified according to the hash values. A file can be specified more accurately by including identity information such as a hash value in the characteristic information of the file.

In other words, the file specifying means attempt file specification by means of other attribute information being the file name, file size, update date or time. However, when, supposedly, a plurality of files with the same name, same size, and with an equal update date and time is present, the file cannot be specified by means of the other attribute information alone. In this case, the file specifying means specify the file by calculating identity information (a hash value) for a plurality of retrieved candidate files and comparing this information with identity information included in the characteristic information.

A case where a plurality of files with common identity information indicating a file content identity is present has also been considered. In this case, the file specifying means specify a file by focusing on file path information. That is, the file specifying means specify the file by determining the similarities between file path information prior to the transfer and file path information following the transfer. Stated in more detail, of the file path information, the path information located at the top of the directory structure possesses properties that are dependent on the system (OS), and path information located at the bottom of the directory structure possesses properties dependent on the user. The user suitably sets a directory with a name that is easy for him/her to understand in a storage region that he or she is able to use in order to perform proprietary file management. Therefore, the file can be specified by analyzing the similarity with an emphasis on the lower-order information of the file path information, for example.

The method for transferring files between file sharing devices according to a further embodiment of the present invention wherein the file sharing devices have different operating systems comprises the steps of: selecting at least one or more files to be transferred from a transfer source file sharing device; acquiring characteristic information including predetermined attribute information relating to the selected file(s); transferring the selected file(s) to the transfer destination file sharing device; and transferring in a separate file the acquired characteristic information relating to said selected files, characterised in that:
said characteristic information includes other attribute information, being one of the file name, file size, update date and time or file path information, relating to the selected file(s) and identity information indicating a file identity that is obtained by processing data of the selected file (s) by means of a predetermined function; and the method further comprises the steps of: specifying the file(s) transferred to the transfer destination file sharing device on the basis of the acquired characteristic information; associating the predetermined attribute information included in the characteristic information with the specified file(s); when unable to specify said file by means of the other attribute information included in the characteristic information, specifying the file by using the predetermined function to generate the identity information and then comparing the generated identity information with the identity information included in the characteristic information; and when unable to specify said file by means of the identity information, determining the similarity between file path information of the transfer source file sharing device and file path information of the transfer destination file sharing device, by comparing parts of the file paths, and then specifying the file on the basis of this similarity.

### BRIEF DESCRIPTION OF THE DRAWINGS

Fig. 1 is a block diagram showing an overall outline of the file sharing system according to an embodiment of the present invention;
Fig. 2 is an explanatory view of an example of access control information;
Fig. 3 is an explanatory view of an example of an examination result file;
Fig. 4 is a schematic view of a file management image in a case where a file is transferred, in which Fig. 4(a) is a file management image for the transfer source, Fig. 4(b) is a file management image of the transfer destination, and Fig. 4(c) shows a view from the client side;
Fig. 5 is a flowchart showing an outline of the overall operation in a case where a file is transferred;
Fig. 6 is a flowchart showing examination result file generation processing that is executed by the transfer source file server;
Fig. 7 is a flowchart showing ACL information resetting processing that is executed by the transfer destination file server;
Fig. 8 is a flowchart showing the details of S34 in Fig. 7;
Fig. 9 is a schematic view of an aspect in which a plurality of files with the same content is present;
Fig. 10 is a flowchart of ACL information resetting processing according to a second embodiment of the present invention;
Fig. 11 is a flowchart of duplicate file deletion processing according to a third embodiment of the present invention; and
Fig. 12 is a flowchart showing examination result file transfer processing.

### DESCRIPTION OF THE PREFERRED EMBODIMENTS

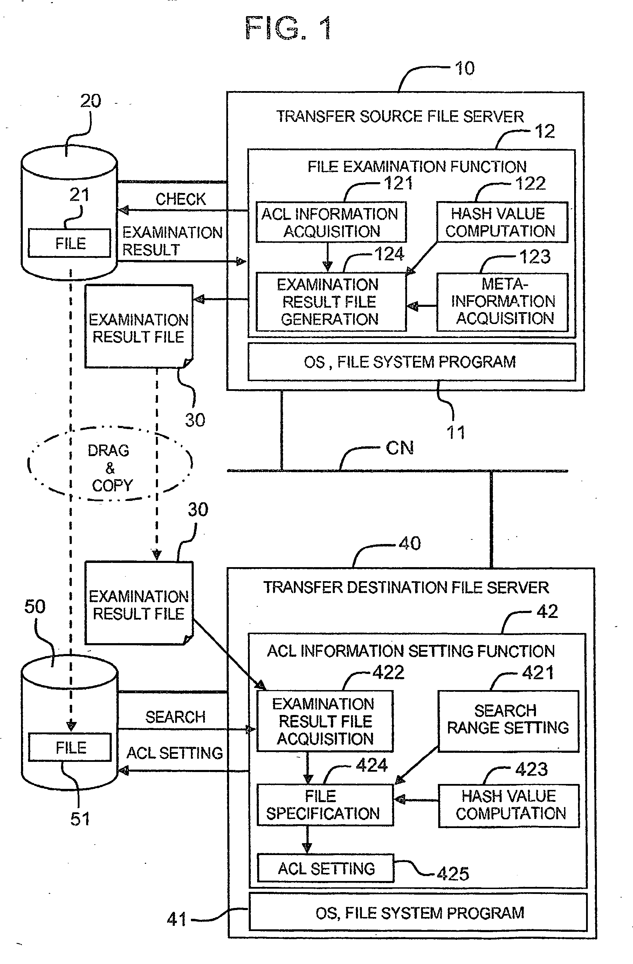

Embodiments of the present invention will be described below on the basis of Figs. 1 to 12.

As described in detail hereinbelow, the present invention specifies transferred files and automatically sets access control information by means of co-operation between a computer program (file examination agent) that is executed by the transfer source file server and a computer program (file specification and attribute setting agent) that is executed by a transfer destination file server.

### First Embodiment

Fig. 1 is a block diagram showing an overall outline of the file sharing system according to this embodiment. As will be described subsequently, the file sharing system is constituted comprising a transfer source file server 10 that comprises a file system 20, and a transfer destination file server 40 that comprises a file system 50. The file servers 10 and 40 may be devices that implement a file sharing protocol in a general-purpose OS, or may be devices (NAS) having an OS specialized for file sharing services.

The transfer source file server 10 controls the file system 20 and comprises an OS and file system program (hereinafter 'OS or similar') 11, and a file examination function 12. The OS or similar 11 provides a base for file sharing services, such as one that accepts file access requests (read/write) from administrator of the transfer source file server 10, file system 20, or from users other than the administrator and provides services in accordance with the file access requests for example. The OS or similar 11 is compatible with one or more file sharing protocols.

The file examination function 12 examines characteristic information (described subsequently) with respect to transfer target files, and outputs an examination result file 30. The examination result file 30 is used by the transfer destination file server 40. The file examination function 12 can be constituted by an ACL information acquisition function 121, a hash value computation function 122, a meta-information acquisition function 123, and an examination result file generation function 124, for example. The file examination function 12 can be wholly constituted by a computer program but is not limited to a computer program. At least some of these functions can also be constituted by a hardware circuit. Further, the file examination function 12 can also be mounted in a communication control unit such as an NIC (Network Interface Card), for example.

The ACL information acquisition function 121 acquires ACL information that is access control information set in a file constituting a transfer target. In other words, the ACL information acquisition function 121 acquires information indicating in what manner (reading, writing and execution) and by which users a transfer target file can be accessed. Further, access control information is not limited to ACL information. The hash value computation function 122 generates, with respect to a file constituting a transfer target, a pseudorandom number of fixed length that is dependent on the file content by passing the data of this file through a predetermined hash function. Further, as long as the file content identity is verifiable information, file content identity is not limited to a hash value. The meta-information acquisition function 123 acquires metadata associated with the transfer target file. Examples of metadata can include the file name, file size, file path information (information indicating the storage position of the file system 20), the update date and time (year/month/day/hour/minutes/seconds). The examination result file generation function 124 generates and outputs the examination result file 30, which defines the characteristics of the transfer target file by means of the acquired ACL information, hash value, and metadata. The constitution of the examination result file 30 will be described in more detail later.

The file system 20 is connected to the transfer source file server 10 and stores a multiplicity of files 21. The file system 20 is constructed by using storage devices such as a hard disk drive, semiconductor memory, optical disk, for example, and the storage devices constituting the file system 20 can be interconnected by a SAN or similar, for example. The transfer source file server 10 and file system 20 may be constituted as separate devices or may be incorporated in one device.

The transfer destination file server 40 controls the file system 50 and comprises an OS or similar 41 and an ACL information setting function 42. The transfer destination file server 40 is connected to the transfer source file server 10 so that bidirectional data communications via a communication network CN such as a LAN, for example, are possible. Further, the transfer destination file server 40 is connected to one or more (normally a multiplicity of) client terminals (not shown) via a communication network such as a LAN or the Internet. In addition, the communication network used for file sharing services and the communication network used for file transfers may be a common network or may be separate networks. The OS or similar 41 provides a base for file sharing services, such as one that accepts file access requests (read/write) from the administrator of the transfer destination file server 40, file system 50, or from users other than the administrator and provides services in accordance with the file access requests for example. The OS or similar 41 is compatible with at least one or more file sharing protocols. Stated in more detail, the OS or similar 41 is compatible with a file sharing protocol that the transfer destination file server 40 comprises and another file sharing protocol that differs from this file sharing protocol.

The ACL information setting function 42 specifies a file 51 that is transferred from the file system 20 of the transfer source file server 10 to the file system 50 of the transfer destination file server 40 on the basis of the examination result file 30, and resets the ACL information. The ACL information setting function 42 can be constituted comprising a search range setting function 421, an examination result file acquisition function 422, a hash value computation function 423, a file specification function 424, and an ACL setting function 425, for example. The ACL information setting function 42 can also be wholly constituted as a computer program and at least partially constituted as a hardware circuit.

The search range setting function 421 is for presetting the range within which the file system 50 is searched. For example, by setting the search range on the basis of a directory that is set for disclosure by the transfer destination file server 40 and a directory of transferred files, the search can be performed efficiently by filtering the search range. The examination result file acquisition function 422 acquires the examination result file 30 generated by the file examination function 12 of the transfer source file server 10. Further, the examination result file 30 is transferred from the transfer source file server 10 to the transfer destination file server 40 manually or automatically as per an embodiment described later. The hash value computation function 423 calculates a hash value that is based on the file content as information for specifying the file. A hash value may be determined in the same way for a retrieved file or a hash value may be calculated only in cases where a file is specified. The file specification function 424 searches the search range set in the file system 50 on the basis of the examination result file 30 and specifies which file the file transferred from the file system 20 to the file system 50 is. When a file is specified, the ACL setting function 425 resets the ACL that was set prior to the transfer to a post-transfer file on the basis of the examination result file 30.

As per the file system 20, the file system 50 is constituted by using storage devices such as a hard disk, semiconductor memory, optical disk, and is capable of storing a multiplicity of files.

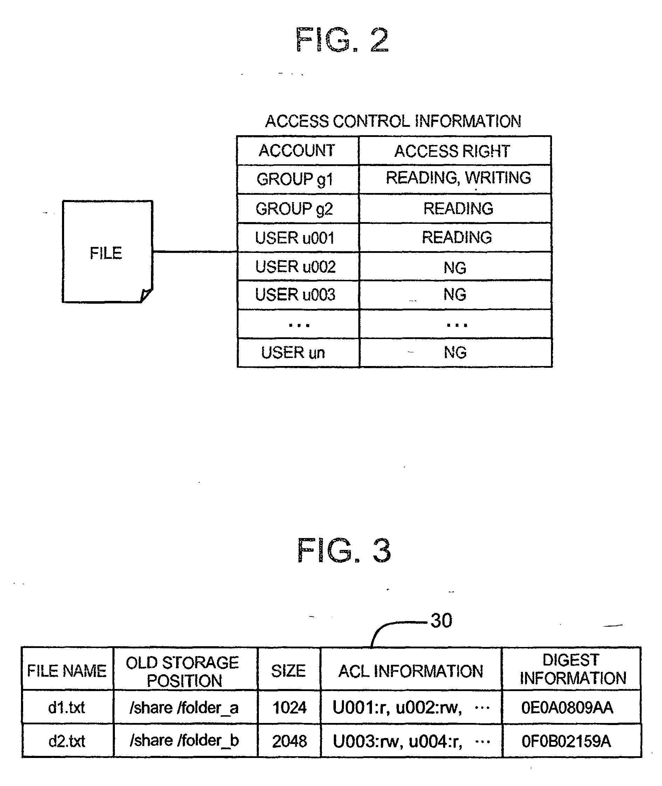

Let us refer now to Fig. 2. Fig. 2 is an explanatory view that schematically shows an example of ACL information. As shown in this figure, access control information (ACL information) can be set in each file. For example, rights enabling access by each account, such as a user, group, to each file can be defined for each account. Examples of access rights include the reading of files (reading), writing to file (writing), access denial (NG).

Let us refer now to Fig. 3. Fig. 3 is an explanatory view of an example of the examination result file 30 generated by the file examination function 12. The examination result file 30 incorporates information distinguishing each file into one record for all the transfer target files. Examples of information distinguishing each file can include the file name, the old storage position (storage position in the transfer source file system 20), the file size, ACL information, digest information (hash value). Other characteristic information such as the update date and time and the creator may also be added. Further, although an examination result file 30 that compiles a plurality of files transferred in a single transfer operation is generated in this embodiment, the present invention is not limited to such an examination result file 30. An examination result file may be generated for each of the files transferred.

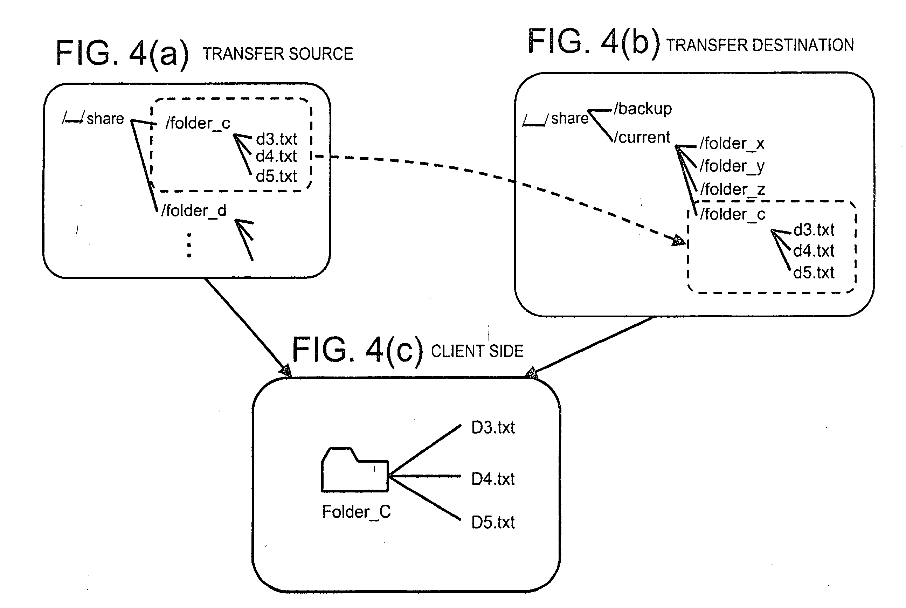

Fig. 4 is a schematic view of a case where a file is transferred from the transfer source file server 10 to the transfer destination file server 40, in which Fig. 4(a) shows an image of the file management of the transfer source file server 10, Fig. 4(b) shows an image of the file management of the transfer destination file server 40, and Fig. 4(c) shows an image of the directory structure as seen from the client side.

A transfer target directory '/folder_c' is placed under '/share' and has three text files 'd3.txt', 'd4.txt', and 'd5.txt'. When the directory '/folder_c' is transferred to the transfer destination file server 40, this directory is stored in a directory '/current' that is formed below '/share', for example, as shown in Fig. 4(b). Because the respective OS of - the transfer source file server 10 and the transfer destination file server 40 are different, the directory structure is different in each case. However, as shown in Fig. 4(c), there is no change before or after the transfer from the perspective of the client. This is because the transfer destination file server 40 supplies file sharing services to the client by concealing the difference in the actual directory structure. As shown in Fig. 4, even when there is no change before or after the transfer of the directory structure from the client side, the actual storage position (file path) changes. Accordingly, when ACL information is reset afterwards, a search must be performed by determining specified files within a directory structure that is different from that before the transfer. This embodiment provides one solution to this problem.

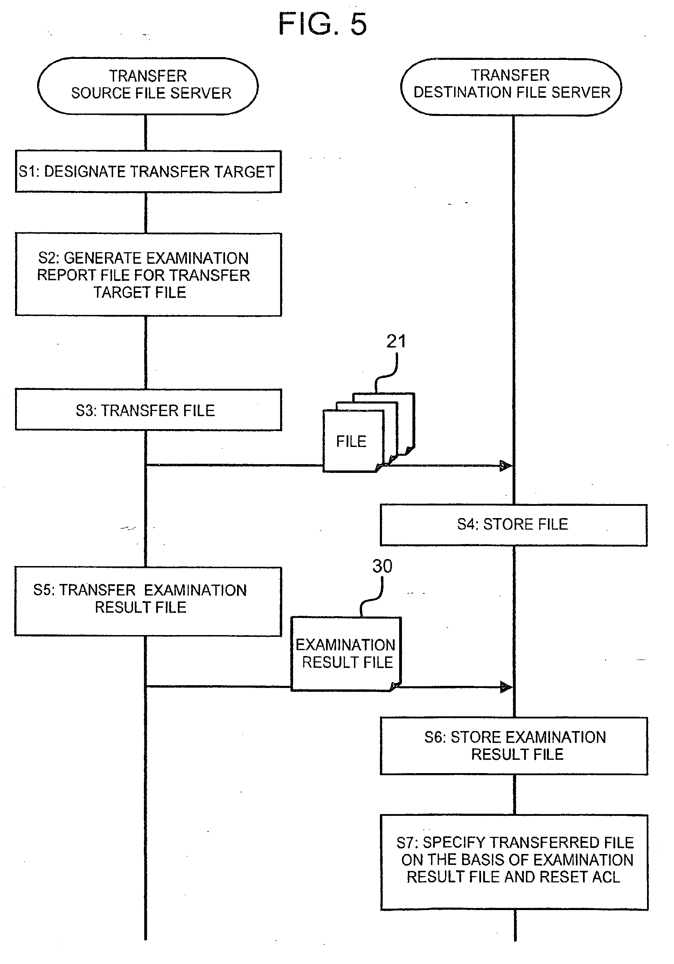

Fig. 5 is a flowchart showing an outline of the overall operation of the file sharing system. A user such as an administrator designates (S1) transfer target files (including directories). The user is also able to select transfer targets in file units or select transfer targets in directory units. Alternatively, it is possible to select both files and directories.

When transfer target files are selected, the file examination function 12 of the transfer source file server 10 acquires characteristic information for all the selected files and generates the examination result file 30 (S2). Next, when a selected file 21 is transferred to the transfer destination file server 40, this file (or file group) is stored in the transfer destination file system 50 (S3). Then, the examination result file 30 generated in S2 is also transferred to the transfer destination file server 40 (S5) and stored in the memory of the transfer destination file server 40, for example (S6). The ACL information setting function 42 of the transfer destination file server 40 specifies the transferred file from among files stored in the file system 50 by referencing the examination result file 30 and then resets the ACL information (S7).

Further, in Fig. 5, for the sake of expediency in the description, the transfer target file and examination result file 30 are shown as being transferred separately but both these files may be transferred at the same time. Further, the selected file and examination result file 30 can be transferred by means of a manual drag & drop operation by the user, for example. More specifically, the transfer target file is selected by using a selection device such as a mouse and then transferred to the network-mounted transfer destination file server 40 by means of a graphical operation. Because of this operation, the selected file is transferred from the transfer source file server 10 to the transfer destination file server 40 via the communication network CN. Similarly to the selected file, the examination result file 30 can also be transferred to the transfer destination file server 40 by means of a drag & drop operation. Otherwise, the selected file and examination result file 30 may be transferred by means of a command line interface by using a transfer command. Further, the selected transfer target file and the examination result file 30 describing the file characteristics can each be transferred to the transfer destination file server 40 by means of different methods.

Furthermore, the hash value of the examination result file itself is computed by using the hash value computation function 122 or another hash value computation function (not shown) of the transfer source file server 10 on the examination result file created by the transfer source file server 10, and this hash value is managed and stored by the transfer source file server 10. This hash value is then transferred in accordance with a request from the transfer destination file server 40. When the transfer destination file server 40 compares the hash value retrieved from the transferred examination result file and the hash value transferred from the transfer source file server 10 by using the hash value computation function 423 or another hash value computation function (not shown), any deterioration of the examination result file itself is identifiable and an embodiment in which more consideration is directed toward security can be achieved. Naturally, as long as the identity of the examination result file is verifiable information, a value other than a hash value can be used. In the case of this embodiment, in addition to the hash value (or information making it possible to verify the file content identity) being used in order to specify the transfer target file, the hash value may be used in the judgment of whether the transfer of the examination result file itself is reliable.

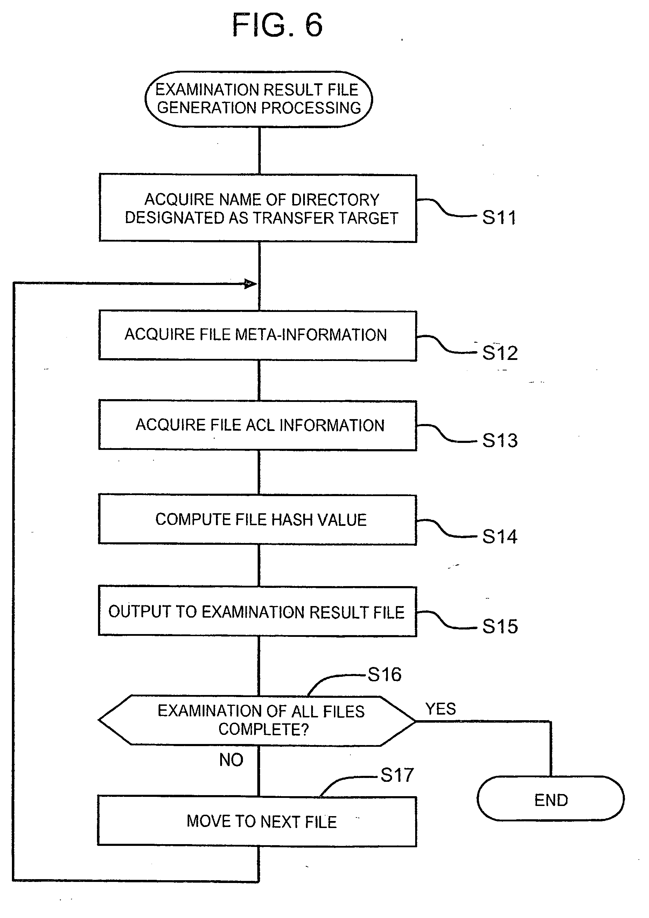

Fig. 6 is a flowchart showing examination result file generation processing that is executed by the file examination function 12 of the transfer source file server 10. Although Fig. 6 illustrates a case where a certain single directory is transferred, in a case where a plurality of directories is transferred at the same time, the processing shown in Fig. 6 may be repeated a number of times equal to the number of directories. In addition, in a case where only one or a plurality of files in the directory is transferred, the examination result file 30 may be generated for selected files alone.

First, the name of the transfer target directory selected by the user is acquired (S11). Then, the following processing is repeatedly executed for each file contained in the selected directory. That is, file meta-information (file name, file size) is acquired (S12). Then ACL information for the file is acquired (S13), and the hash function of this file is calculated (S14). When characteristic information is thus obtained for one file, this characteristic information is output to the examination result file 30 as a single record (S15). Until the examination is complete for all the files contained in the selected directory (S16), the above-mentioned examination processing is repeated while moving the file pointer that designates the examination target (S17). The processing is terminated when characteristic information has been acquired for all the files and examination is complete (S16: YES).

Further, as mentioned above, when the hash value of the examination result file is provided in accordance with the request from the transfer destination file server 40, the hash value of the examination result file is managed by being associated with the examination result file 30.

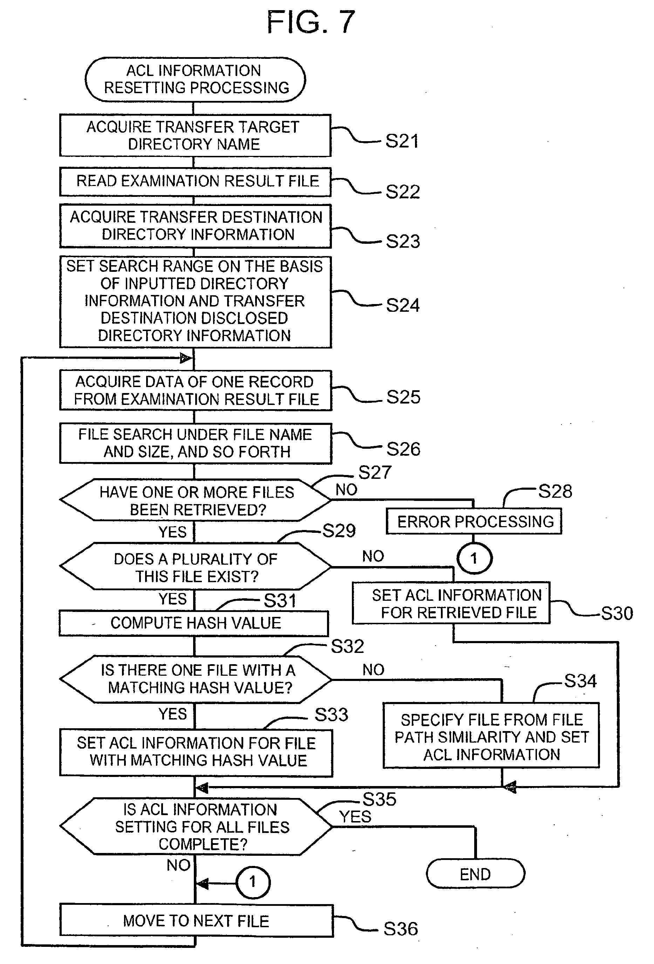

Next, Fig. 7 shows ACL information resetting processing that is executed by the ACL information setting function 42 of the transfer destination file server 40. First, the name of the transferred directory is acquired (S21). The directory name can be acquired by way of a manual operation (drag & copy) by the user, for example. Next, the examination result file 30 generated by the transfer source file server 10 is read (S22). Here, if required, the hash value of the examination result file 30 thus read is calculated, the hash value corresponding with the examination result file 30 is obtained by accessing the transfer source file server 10, and the hash value obtained through calculation and the hash value obtained from the transfer source file server 10 are compared. As a result, when the hash values do not match, the processing may be interrupted, and when the hash values match, the processing may move on to step 23.

Next, transfer destination directory information is acquired (S23). For example, where Samba is concerned, directories disclosed by Samba are made explicit in an smb. conf file. Then, the search range is set on the basis of transfer target directory information and information on the disclosed transfer destination directories (S24). In other words, rather than the whole of the transfer destination file system 50 being set as the search range, a search range is set within at least the disclosed directories of the file system 50. A futile search can thus be prevented beforehand.

Next, one record's worth of data is acquired from the examination result file 30 (S25), and, based on general characteristic information such as the file name, file size, a search is performed for files within the set search range (S26). When not even a single file is retrieved as a result of this first stage file search (S27: NO), this represents a case where the file selected as the transfer target was not transferred for whatever reason, and hence error processing is performed (S28). Examples of error processing include outputting the name of the file, for which the search failed to an error log file, for example. After the error processing, processing moves to the next file (S36).

When one or more files are retrieved because of a first stage file search under the file name, file size, (S27: YES), it is judged whether a plurality of the retrieved file exists (S29). When only one file has been retrieved (S29: NO), this unique retrieved file is judged as being an object file and the ACL information set in the source file is reset (S30). That is, the same (or substantially the same) access right as the access control set prior to the transfer is set. Further, when the respective formats of the ACL information of the transfer source and the ACL information of the transfer destination are different, ACL information may be suitably altered in accordance with preset conversion rules, for example.

When a plurality of files with the same name and size have been retrieved (S29: YES), a hash value is calculated for each of the retrieved files (S31). Further, it is judged whether only one file with the same hash value as the hash value of the transfer target source file is present (conversely, whether a plurality of files with the same hash value exists) (S32). When only one file with the same hash value exists (S32: YES), the file with the same hash value is judged as being an object file and the ACL information set in the source file is set (S33).

When a plurality of files with the same hash value have been retrieved (S32: NO), a single object file is specified (S34) by comparing the source file path information indicated by the examination result file 30 and the file path information of the retrieved file. This file path-based file specification will be described subsequently.

The above processing is repeated (S36) while transferring search target files until all the transfer target files have been specified and ACL information has been set (S35). The processing is terminated when all the transfer target files have been specified and ACL information has been set (S35: YES).

Further, when the processing ends after passing via step 35 (normal completion), management may be carried out by the transfer destination file server 40 by setting a transfer complete flag in an environment settings file (not shown) of the file system 50. In the case of this embodiment, the operation of the transfer destination file server 40 can be afforded scope in the event of a file access request (read/write). For example, when services corresponding with the file access request (read/write) are provided by the OS or similar 41, it is judged whether the file access request is from the administrator of the transfer destination file server 40, file system 50, or from a user other than the administrator. When a transfer complete flag is not set in the environment settings file, only the administrator has file access permissions, users other than the administrator being denied file access (error return). When a transfer complete flag is set, it is possible to further preserve the normal operation of the file system 50 by granting file access to the administrator and users other than the administrator.

Therefore, in this embodiment, files are specified by means of a three-stage search. The first stage search is conducted by using general characteristic information (file name, file size) listed in the examination result file 30. The first stage search does not require special processing and selection can be performed rapidly. When specification is not possible by means of the first stage search, a second stage search using a hash value is conducted. Although processing is required for the hash value computation, a file can be specified on the basis of the file content identity. In addition, when a file cannot be specified by means of a hash value, a file is specified in the third stage search by comparing the file path information before and after the transfer. Therefore, the constitution of this embodiment is such that search methods of a plurality of types can be used and the search method gradually becomes advanced.

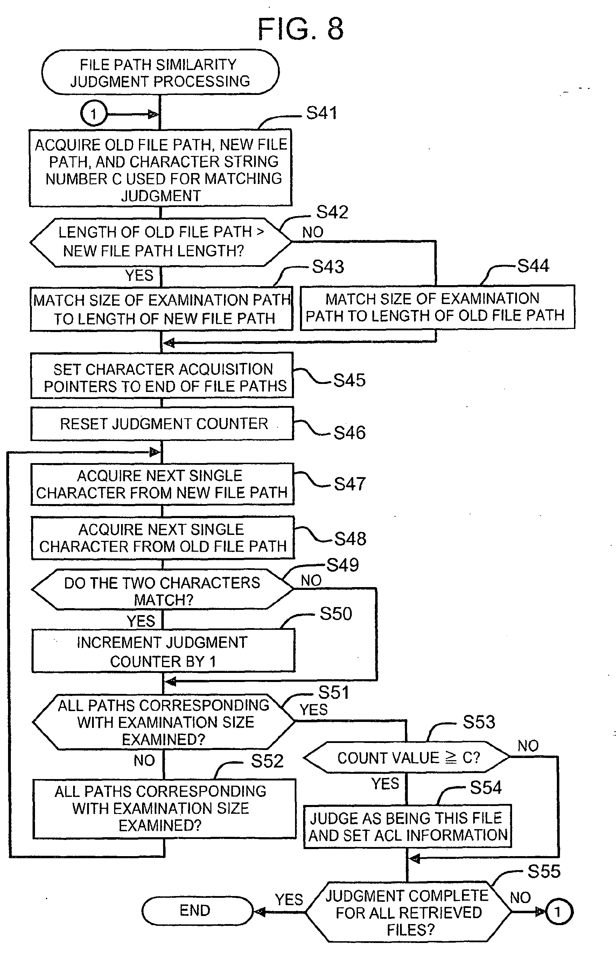

Let us now turn to the flowchart in Fig. 8. Fig. 8 shows the details of S34 in Fig 7. This processing specifies a file from the similarity between file path information (hereinafter abbreviated to 'file path') before and after the transfer. First, a character string number C, which is a judgment value for judging that the file path is similar, is set (S41). When two compared file paths match each other up to or beyond the character string number C, it is judged that the two files are the same. The character string number C used to judge this match can also be set manually by the user or a preset value can be used. Alternatively, the value of the character string number C may be suitably adjusted in accordance with the nature of the transfer target files (the total number of transferred files, the directory depth, for example).

Next, the range (size) for comparing two file paths is set. The pre-transfer file path (old file path) length and the length of the post-transfer file path (new file path) are compared (S42). When the old file path is longer than the new file path (S42: YES), the size of the examination path is matched to that of the size of the shorter new file path (S43). Conversely, when the new file path is longer than the old file path (S42: NO), the size of the examination path is matched to the shorter old file path (S44). The similarity judgment described below is performed one character at a time a number of times equivalent to the path size thus determined.

Character acquisition pointers for acquiring characters for a comparison are set at the end of each new and old file path respectively (S45). Instead of performing the comparison by means of extraction one character at a time from the start of the file path, the comparison is performed by means of extraction one character at a time from the end of the file path. The upper structure of the file path possesses properties that are dependent on each system. On the one hand, the comparison is performed starting from the end of the file path based on the premise that the lower structure of the file path possesses properties that are dependent on the user creating or using the file. If, conversely, the user-dependent part is located in the upper structure of the file path and the system-dependent part is located in the lower structure of the file path, the comparison may be performed by acquiring one character at a time from the start of the file path. Further, although a case where file paths are compared one character at a time is illustrated in this embodiment, the embodiment is not limited to such comparison. File paths could also be compared in word units, for example.

After character acquisition pointers have been set at the end of the file paths, judgment counters for counting the number of times characters taken from the respective file paths match is reset (S46). Then one character is taken from the end of the new file path (S47), and one character is taken from the end of the old file path (S48). Further, subsequently extracted characters from each file path are compared and a judgment of whether the two characters match is made (S49). When the two characters match (S49: YES), the judgment counter is incremented (S50). When the two characters do not match (S49: NO), S50 is skipped without incrementing the judgment counter.

Next, a judgment of whether all the characters have been examined is made with respect to paths in proportion to the examination size set in S43 or S44 (S50). When not all the characters have been compared (S50: NO), the character acquisition pointers are shifted to the next character (shifted from the end of the file paths by one character in the direction of the start of the path), and the processing of S47 to S50 is repeated (S52). When examination of the character string of each file path has been completed in an amount proportional to the examination size (S51: YES), the count value of the judgment counter and the character string number C set in S41 are compared (S53). When the judgment counter count value is equal to or more than the matching judgment character string number C (S53: YES), it is judged that the examined files match each other and ACL information is then set in specified files in the transfer destination file system 50 (S54). When the judgment counter count value is less than the character string number C (S53: NO), the two files are judged as being different, and the ACL information is not set. The file path similarity judgment processing above is executed for all the files with the same hash value (S55). The processing is terminated when the judgment with respect to all the files with the same hash value is complete (S55: YES). Further, when a plurality of files for which there is a similarity at a level equal to or more than the character string number C exists, files with a larger judgment counter count value may be specified as being object files or may be entrusted to the administrator's judgment.

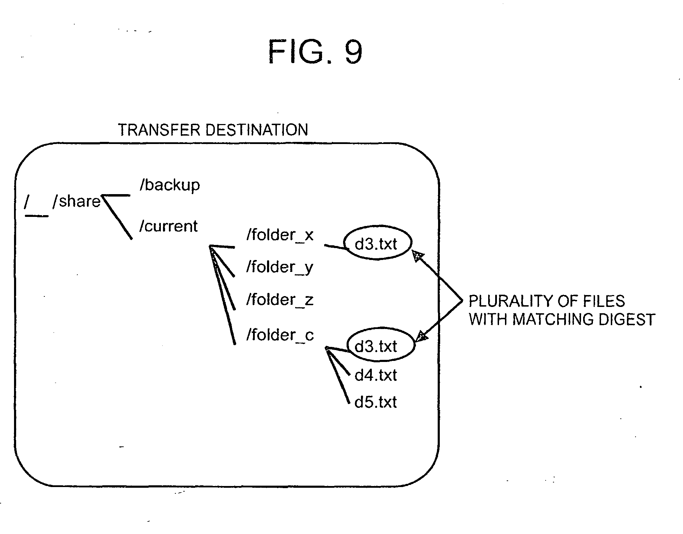

Fig. 9 is a schematic view of a case where a plurality of files with the same hash value exists in the transfer destination file system 50. Here, the transfer target file is 'd3.txt' of '/folder_c', as shown in Fig. 4(a). The old file path in the transfer source is then /share/folder_c/d3.txt'. As shown in Fig. 9, 'd3.txt' is present in two places in the transfer destination file system 50. The two files 'd3.txt' have the same content and the same hash value. Further, general attributes other than the hash value (such as the file name, file size, and update date and time) are also the same.

One file path of this file is '/share/current/folder_x/d3.txt'. Another file path of this file is '/share/current/folder_c/d3.txt'. When these two file paths are compared one character at a time in a direction from the end toward the start of the path, there is clearly a large number of characters for which '/share/current/folder_c/d3.txt' matches '/share/folder_c/d3.txt'. Therefore, the file '/share/current/folder_c/d3.txt' is specified as the transferred file and ACL information with the same content (or substantially the same content) as the ACL information set in '/share/folder_c/d3.txt' is set.

According to the embodiment with this constitution, information distinguishing the transfer target file is examined by the transfer source file server 10, and the transfer destination file server 40 specifies the file on the basis of the examination result file 30 and resets the ACL information. Hence, even when files are transferred between different OS (different file sharing protocols), attribute information (ACL information) can be automatically set. Accordingly, files can be transferred smoothly and rapidly, irrespective of the procedure for specifying the files by means of a manual search.

In other words, according to this embodiment, data file body transfers and attribute information transfers (between file servers with different hierarchical storage structures) are separated and attribute information can be set after the transfer of the data file bodies.

Further, a search is first performed on the basis of general characteristic information (or simple characteristic information) such as the file name, file size, and only in cases where files cannot be specified by this search is a hash value calculated and compared with the hash value of the source file. The load of the hash value computation can therefore be reduced and the processing speed of the file specification processing can be raised.

In addition, in cases where a file cannot be specified by means of a hash value comparison, a file is specified by comparing the file path similarities before and after the transfer. Therefore, the file can be specified even when a plurality of files with the same content exists in the transfer destination file system 50.

Moreover, in this embodiment, three types of search method are executed in stages, namely a first-stage file search based on file name, file size, a second-stage file search based on hash values, and a third-stage file search based on file path similarity. Further, a search method involving advanced processing is executed after a search method involving simple processing. The load of the search processing can thus be reduced by efficiently using the computer resources of the transfer destination file server 40.

In addition, when the file path similarity is judged, examination is performed starting from the end of the file path that readily depends on the user, and hence, in comparison with a case where examination is performed starting from the start of the file path, files can be specified sooner.

### Second Embodiment

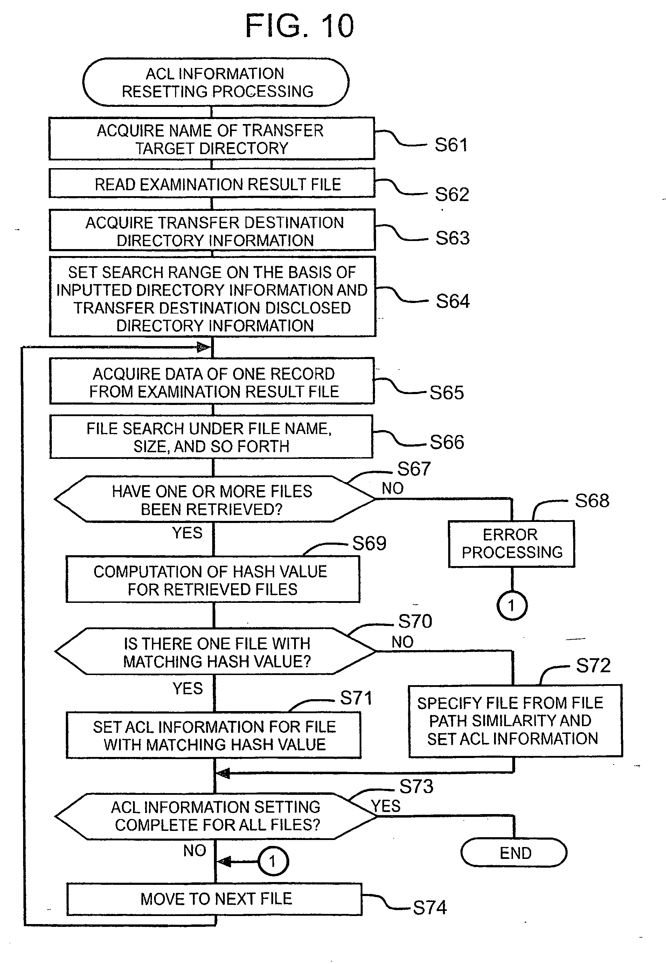

Next, the second embodiment of the present invention will be described with reference to Fig. 10. The special feature of this embodiment consists in the fact that a hash value is determined for all the files retrieved by means of the file name, file size, and then a hash value-based judgment is performed. That is, the hash value is examined even in the event of only one retrieved file.

S61 to S68 in the flowchart shown in Fig. 10 correspond to S21 to S28 in Fig. 7 and hence a description of S61 to S68 will be omitted here. When one or more files retrieved by means of file name, file size, are present (S67: YES), the hash value is calculated irrespective of whether there is a plurality of retrieved files (S69). That is, the hash value is calculated even when there is only one of this file. Further, when there is only one file with the same hash value, this file is judged as being an object file and ACL information is set (S70, S71). When there is a plurality of files with the same hash value, a file is specified based on file path similarity (S72). Further, processing is repeated with respect to all the transfer target files (S73, S74).

Therefore, because a hash value is determined for all the files extracted by means of the first-stage search according to file name, file size, a hash value-based comparison is also undertaken even when there is only one file with a common file name. A file can therefore be specified accurately and hence the reliability of the file specification increases.

### Third Embodiment

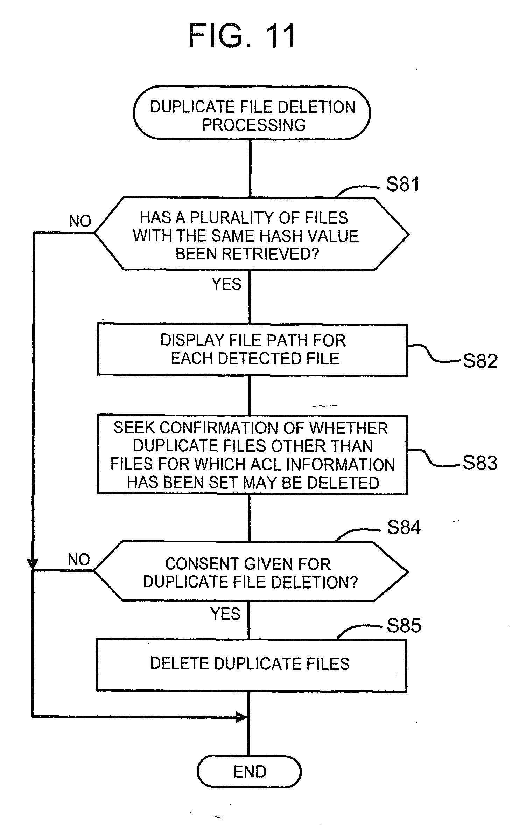

Next, the third embodiment of the present invention will be described based on Fig. 11. The special feature of this embodiment consists in the fact that, when a search for files with the same hash value is conducted, duplicate files are displayed for the user and these duplicate files are deleted.

The flowchart shown in Fig. 11 shows the processing for deleting duplicate files. This processing is executed after a file transfer from the transfer source file server 10 to the transfer destination file server 40 has been completed, for example.

First of all, it is judged whether a plurality of files with the same hash value have been retrieved in the file transfer processing described in conjunction with Fig. 7 (S81). When a plurality of files with the same hash value have not been retrieved, the processing is terminated. When a plurality of files with the same hash value have been retrieved (S81: YES), this constitutes a case where a plurality of files with duplicate content is present in the transfer destination file system 50. The file path of each retrieved file with the same content is displayed on the monitor screen (S82), and it is confirmed by the user whether, of these displayed duplicate files, files other than the files specified as a result of file path similarity may be deleted (S83). When the user consents (S84: YES) to the deletion of unnecessary files (files for which ACL information is not ultimately set) among the duplicate files via a keyboard switch, pointing device, or the like, for example, these unnecessary duplicate files are deleted to free up the storage region (S85).

The embodiment with this constitution comprises means (deletion step) for deleting detected duplicate files, and therefore unnecessary files among the duplicate files detected in accordance with the file transfer operation can be deleted. Compression of the storage region of the transfer destination file system 50 by worthless files can therefore be prevented and the user usage amount (QUOTA) can be suitably managed.

### Fourth Embodiment

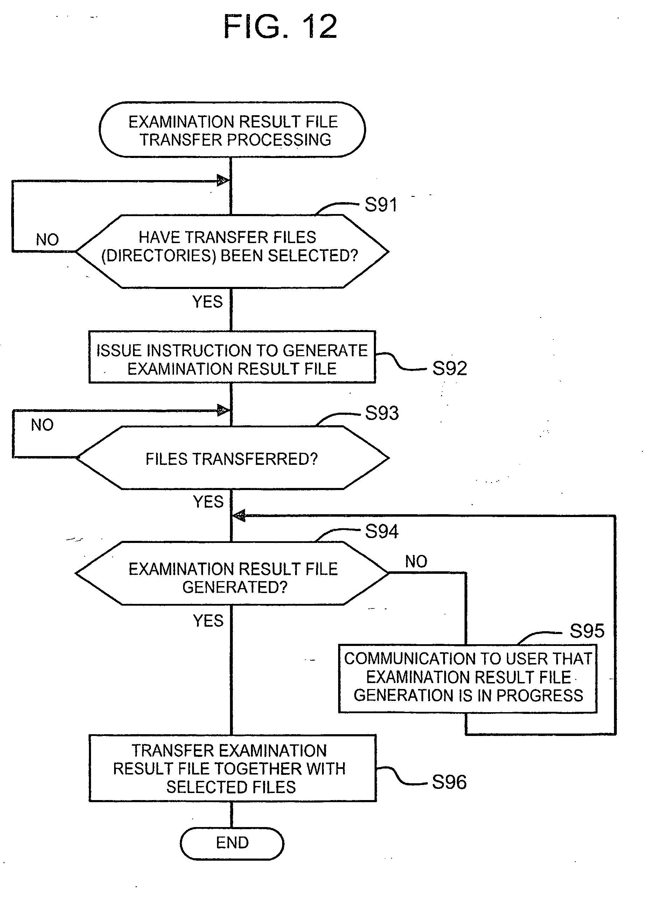

Next, a fourth embodiment of the present invention will be described with reference to Fig. 12. The special feature of this embodiment consists in the fact that, when a transfer target file is selected, the examination result file 30 is generated in the background, and the examination result file 30 is transmitted to the transfer destination file server 40 at the same time as the transfer target file.

Fig. 12 is a flowchart showing examination result file transfer processing. First, it is judged by the user whether the transfer target file has been selected (S91). When the transfer target file has been selected (S91: YES), an instruction to generate the examination result file 30 is issued (S92). Accordingly, examination result file generation processing described in conjunction with Fig. 6 is executed. Next, it is judged whether an instruction to transfer (copy) the selected files has been issued (S93). When a file transfer instruction has been issued (S93: YES), it is judged whether or not the examination result file 30 has been generated (S94). When the generation of the examination result file 30 is in progress (S94: NO), the fact that the generation of the examination result file 30 is in progress is communicated to the user (S95) who is put on standby. Further, when the examination result file 30 has been generated (S94: YES), the examination result file 30 is transmitted to the transfer destination file server 40 together with the selected file (S96).

In the embodiment with this constitution, transfer target files and the examination result file 30 can be transferred at the same time. Therefore, forgetting to transmit the examination result file 30 to the transfer destination file server 40 can be prevented.

Moreover, the present invention is not limited to or by the above embodiments. A person skilled in the art is able to make a variety of additions or modifications within the scope of protection as defined in the amended claims.

## Claims

1. A file sharing system, comprising:
a transfer source file sharing device (10) having a first operating system (11);
a transfer destination file sharing device (40) having a second operating system (41) and which is communicably connected to said transfer source file sharing device (10);
selecting means for selecting at least one or more files (21) kept in the transfer source file sharing device (10);
file examining means (12) for acquiring characteristic information (30) on the selected file(s);
file transferring means for transferring the selected file(s) and said characteristic information (30) to the transfer destination file sharing device (40), wherein:
the system is arranged to transfer characteristic information in a separate file (30) to the file(s) to which the characteristic information relates; and
the second operating system is different to said first operating system, **characterised in that**:
the system further comprises file specifying means (424) for specifying the file(s) transferred to the transfer destination file sharing device by matching each transferred file (S1) with its respective characteristic information, wherein:
the file examining means (12) is arranged to acquire-characteristic information (30) including other attribute information, being one of the file name, file size, update date and time or file path information, relating to the selected file(s) and identity information indicating a file identity that is obtained by processing data of the selected file(s) by means of a predetermined function;
when unable to specify said file by means of the other attribute information included in the characteristic information, the file specifying means (424) is arranged to specify the file by using the predetermined function to generate the identity information and then to compare the generated identity information with the identity information included in the characteristic information; and
when unable to specify said file by means of the identity information, the file specifying means (424) is arranged to determine the similarity between file path information of the transfer source file sharing device and file path information of the transfer destination file sharing device, by comparing parts of the file paths, and then specify the file on the basis of this similarity.

2. The file sharing system according to claim 1, wherein the transfer destination file device (40) comprises attribute resetting means (425) for acquiring characteristic information including predetermined attribute information relating to the selected file(s) and for associating the predetermined attribute information included in the characteristic information with the file(s) specified by the file specifying means (424).

3. The file sharing system according to claim 2, wherein the predetermined attribute information is access control information relating to the selected file(s).

4. The file sharing system according to any one of claims 1 to 3, wherein when the file specifying means (424) determines the similarity between file path information of the transfer source file sharing device and file path information of the transfer destination file sharing device, this determination is made with emphasis on the lower-order information of the file path information.

5. A method for transferring files between file sharing devices (10, 40), wherein the file sharing devices have different operating systems (11, 41), the method comprising the steps of:
selecting (S1) at least one or more files (21) to be transferred from a transfer source file sharing device (10);
acquiring (S2) characteristic information including predetermined attribute information relating to the selected file(s);
transferring (S3) the selected file(s) to the transfer destination file sharing device (40); and
transferring (S5) in a separate file the acquired characteristic information (30) relating to said selected files, **characterised in that**:
said characteristic information includes other attribute information, being one of the file name, file size, update date and time or file path information, relating to the selected file(s) and identity information indicating a file identity that is obtained by processing data of the selected file(s) by means of a predetermined function; and
the method further comprises the steps of:
specifying (S7) the file(s) transferred to the transfer destination file sharing device on the basis of the acquired characteristic information (30);
associating (S7) the predetermined attribute information included in the characteristic information with the specified file(s);
when unable to specify said file by means of the other attribute information included in the characteristic information, specifying the file by using the predetermined function to generate the identity information (30) and then comparing the generated identity information with the identity information included in the characteristic information; and
when unable to specify said file by means of the identity information, determining the similarity between file path information of the transfer source file sharing device and file path information of the transfer destination file sharing device, by comparing parts of the file paths, and then specifying the file on the basis of this similarity.

6. A method according to claim 5, including the further steps of:
acquiring (S21) the name of a transferred directory;
reading (S22) the generated identity information (30);
acquiring (S23) transfer destination directory information;
setting (S24), on the basis of information on the transfer target directory and said transfer destination directory information, a search range;
acquiring (S25) a single record of data from the identity information;
based on general characteristic information in said record, performing (S26) a search for files within the set range having identical characteristic information to said general characteristic information in said record;
judging (S29) whether a plurality of files are found in said search;
where only a single file is found in said search, setting (S30) the access control list information for said file based on the access control set for the transfer target source file;
where a plurality of files are found in said search:
calculating (S31) a hash value for each of the retrieved files;
judging (S32) whether only one file found in said search has the same hash value as the hash value of the transfer target source file;
where only a single file found in said search is judged to have the same hash value as the hash value of the transfer target source file, setting (S33) the access control list information for said file based on the access control set for the transfer target source file;
where a plurality of files are judged to have the same hash value as the hash value of the transfer target source file, specifying (S34) a single object file from among said plurality by comparing the source file path information indicated by the identity information and the file path information of each of said plurality of files;
repeating (S36) the above steps until all transfer target files have been specified.

7. A method according to claim 6 wherein said step of specifying (S34) by comparing the source file path information indicated by the identity information and the file path information of each of said plurality of files includes the sub-steps of:
setting (S41) a character string number, which is a judgement value for judging that the file path is similar; comparing (S42) the length of the source file path to the length of the file path of a selected one of said plurality of files;
setting (S43, S44) as a size of the examination path the size of the shorter of either the length of the source file path or the length of the file path of said selected file;
setting (S45) character acquisition pointers for acquiring characters for a comparison at the end of each of the source file path and the file path of said selected file;
resetting (S46) a judgement counter for counting the number of times characters taken from the respective file paths match;
acquiring (S47, S48) one character from the end of the source file path and one character from the end of the file path of said selected file;
comparing said acquired characters and judging (S49) whether the two characters match, and if it is judged that the two characters match, incrementing (S50) the judgement counter;
judging (S50) whether the number of characters compared between said file paths is equal to the size of the set examination path;
when the number of characters compared between said file paths is not equal to the size of the set examination path, shifting the acquisition pointers to the next character and repeating (S52) the above steps of acquiring, comparing and judging;
when the number of characters compared is equal to the size of the set examination path, comparing (S53) the count value of the judgement counter and the character string number;
when the judgement counter count value is equal to or more than the character string number, adjudging that the selected file matches the source file, and setting (S54) the access control list information for said selected file based on the access control set for the transfer target source file;
repeating (S55) the above sub-steps for each of said plurality of files.

## Patentansprüche

1. File-Sharing-System, aufweisend:
eine Übertragungsquellen-File-Sharing-Vorrichtung (10) mit einem ersten Betriebssystem (11),
eine Übertragungsziel-File-Sharing-Vorrichtung (40) mit einem zweiten Betriebssystem (41), die eine Kommunikationsverbindung mit der Übertragungsquellen-File-Sharing-Vorrichtung (10) aufweist,
eine Auswahleinrichtung zum Auswählen mindestens einer oder mehrerer Dateien (21), die in der Übertragungsquellen-File-Sharing-Vorrichtung (10) gehalten werden,
eine Dateiprüfeinrichtung (12) zum Gewinnen charakteristischer Informationen (30) über die ausgewählte(n) Datei(en),
eine Dateiübertragungseinrichtung zum Übertragen der ausgewählten Datei(en) und der charakteristischen Informationen (30) an die Übertragungsziel-File-Sharing-Vorrichtung (40), wobei
das System eingerichtet ist, die charakteristischen Informationen in einer von der bzw. den Datei(en), auf die sich die charakteristischen Informationen beziehen, getrennten Datei (30) zu übertragen, und
das zweite Betriebssystem vom ersten Betriebssystem verschieden ist, **dadurch gekennzeichnet, dass**
das System außerdem eine Dateibezeichnungseinrichtung (424) zum Bezeichnen der an die Übertragungsziel-File-Sharing-Vorrichtung übertragenen Datei(en) durch Abgleichen jeder übertragenen Datei (S1) mit ihren entsprechenden charakteristischen Informationen aufweist, wobei
die Dateiprüfeinrichtung (12) eingerichtet ist, charakteristische Informationen (30) einschließlich anderer Attributinformationen, die Dateinamen, Dateigröße, Aktualisierungsdatum und -zeit oder Dateipfadinformationen darstellen, bezüglich der ausgewählten Datei(en) und Identitätsinformationen zu gewinnen, die eine Dateiidentität angeben, die durch Verarbeiten von Daten der ausgewählten Datei(en) mittels einer vorbestimmten Funktion gewonnen wird,
die Dateibezeichnungseinrichtung (424) eingerichtet ist, wenn sie nicht in der Lage ist, die Datei mittels der in den charakteristischen Informationen enthaltenen anderen Attributinformationen zu bezeichnen, die Datei unter Verwendung der vorbestimmten Funktion zum Erzeugen der Identitätsinformationen zu bezeichnen und dann die erzeugten Identitätsinformationen mit den in den charakteristischen Informationen enthaltenen Identitätsinformationen zu vergleichen, und
die Dateibezeichnungseinrichtung (424) eingerichtet ist, wenn sie nicht in der Lage ist, die Datei mittels der Identitätsinformationen zu bezeichnen, die Ähnlichkeit zwischen Dateipfadinformationen der Übertragungsquellen-File-Sharing-Vorrichtung und Dateipfadinformationen der Übertragungsziel-File-Sharing-Vorrichtung durch Vergleich von Teilen der Dateipfade zu bestimmen und dann die Datei aufgrund dieser Ähnlichkeit zu bezeichnen.

2. File-Sharing-System nach Anspruch 1, wobei die Übertragungsziel-File-Sharing-Vorrichtung (40) eine Attributrücksetzeinrichtung (425) zum Gewinnen von charakteristischen Informationen einschließlich vorbestimmter Attributinformationen, die sich auf die ausgewählte(n) Datei(en) beziehen, und zum Zuordnen der in den charakteristischen Informationen enthaltenen vorbestimmten Attributinformationen zu der bzw. den von der Dateibezeichnungseinrichtung (424) bezeichneten Datei(en) aufweist.

3. File-Sharing-System nach Anspruch 2, wobei die vorbestimmten Attributinformationen Zugriffssteuerinformationen sind, die sich auf die ausgewählte(n) Datei(en) beziehen.

4. File-Sharing-System nach einem der Ansprüche 1 bis 3, wobei dann, wenn die Dateibezeichnungseinrichtung (424) die Ähnlichkeit zwischen Dateipfadinformationen der Übertragungsquellen-File-Sharing-Vorrichtung und Dateipfadinformationen der Übertragungsziel-File-Sharing-Vorrichtung bestimmt, diese Bestimmung unter Betonung der Informationen niedriger Ordnung der Dateipfadinformationen durchgeführt wird.

5. Verfahren zum Übertragen von Dateien zwischen File-Sharing-Vorrichtungen (10, 40), die verschiedene Betriebssysteme (11, 41) aufweisen, mit folgenden Schritten:
Auswählen (S1) mindestens einer oder mehrerer Dateien (21), die von einer Übertragungsquellen-File-Sharing-Vorrichtung (10) übertragen werden sollen,
Gewinnen (S2) von charakteristischen Informationen einschließlich vorbestimmter Attributinformationen, die sich auf die ausgewählte(n) Datei(en) beziehen,
Übertragen (S3) der ausgewählten Datei(en) an die Übertragungsziel-File-Sharing-Vorrichtung (40), und
Übertragen (S5) der sich auf die ausgewählten Dateien beziehenden charakteristischen Informationen (30) in einer getrennten Datei, **dadurch gekennzeichnet, dass**
die charakteristischen Informationen andere Attributinformationen, die Dateinamen, Dateigröße, Aktualisierungsdatum und -zeit oder Dateipfadinformationen darstellen, die sich auf die ausgewählte(n) Datei(en) beziehen, und Identitätsinformationen enthalten, die eine Dateiidentität angeben, die durch Verarbeiten von Daten der ausgewählten Datei(en) mittels einer vorbestimmten Funktion gewonnen werden, und
das Verfahren außerdem folgende Schritte umfasst:
Bezeichnen (S7) der an die Übertragungsziel-File-Sharing-Vorrichtung übertragenen Datei(en) aufgrund der gewonnenen charakteristischen Informationen (30),
Zuordnen (S7) der in den charakteristischen Informationen enthaltenen vorbestimmten Attributinformationen zu der bzw. den bezeichneten Datei(en),
wenn das Bezeichnen der Datei mittels der in den charakteristischen Informationen enthaltenen anderen Attributinformationen unmöglich ist, Bezeichnen der Datei unter Verwendung der vorbestimmten Funktion zum Erzeugen der Identitätsinformationen (30) und dann Vergleichen der erzeugten Identitätsinformationen mit den in den charakteristischen Informationen enthaltenen Identitätsinformationen, und
wenn das Bezeichnen der Datei mittels der Identitätsinformationen unmöglich ist, Bestimmen der Ähnlichkeit zwischen Dateipfadinformationen der Übertragungsquellen-File-Sharing-Vorrichtung und Dateipfadinformationen der Übertragungsziel-File-Sharing-Vorrichtung durch Vergleichen von Teilen der Dateipfade und dann Bezeichnen der Datei aufgrund dieser Ähnlichkeit.

6. Verfahren nach Anspruch 5, mit folgenden weiteren Schritten:
Gewinnen (S21) des Namens eines übertragenen Verzeichnisses,
Lesen (S22) der erzeugten Identitätsinformationen (30),
Gewinnen (S23) von Übertragungsziel-Verzeichnisinformationen,
Festlegen (S24) eines Suchbereichs aufgrund von Informationen über das Übertragungszielverzeichnis und die Übertragungsziel-Verzeichnisinformationen,
Gewinnen (S25) eines einzigen Datensatzes aus den Identitätsinformationen,
aufgrund allgemeiner charakteristischer Informationen in dem Datensatz, Ausführen (S26) einer Suche nach Dateien innerhalb des festgelegten Bereichs, die zu den allgemeinen charakteristischen Informationen in dem Datensatz identische charakteristische Informationen aufweisen,
Beurteilen (S29), ob in der Suche mehrere Dateien gefunden wurden,
wenn lediglich eine einzige Datei in der Suche gefunden wurde, Festlegen (S30) der Zugriffskontrolllisteninformationen für diese Datei aufgrund der für die Übertragungsziel-Quellendatei festgelegten Zugriffskontrolle,
wenn mehrere Dateien in der Suche gefunden wurden:
Berechnen (S31) eines Hash-Werts für jede der gewonnenen Dateien,
Beurteilen (S32), ob lediglich eine in der Suche gefundene Datei den gleichen Hash-Wert wie die Übertragungsziel-Quellendatei aufweist,
wenn beurteilt wird, dass lediglich eine einzige in der Suche gefundene Datei den gleichen Hash-Wert wie die Übertragungsziel-Quellendatei aufweist, Festlegen (S33) der Zugriffskontrolllisteninformationen für diese Datei aufgrund der für die Übertragungsziel-Quellendatei festgelegten Zugriffskontrolle,
wenn beurteilt wird, dass mehrere Dateien den gleichen Hash-Wert wie die Übertragungsziel-Quellendatei aufweisen, Bezeichnen (S34) einer einzigen Objektdatei aus den genannten mehreren Dateien durch Vergleichen der von den Identitätsinformationen angegebenen Quellendateipfadinformationen und der Dateipfadinformationen jeder der genannten mehreren Dateien, und
Wiederholen (S36) der obigen Schritte, bis alle Übertragungszieldateien bezeichnet worden sind.

7. Verfahren nach Anspruch 6, wobei der Schritt zum Bezeichnen (S34) durch Vergleichen der in den Identitätsinformationen enthaltenen Quellendateipfadinformationen und der Dateipfadinformationen jeder der genannten mehreren Dateien folgende Unterschritte aufweist:
Festlegen (S41) einer Zeichenkettenzahl, die einen Beurteilungswert zum Beurteilen, dass ein ähnlicher Dateipfad vorliegt, darstellt,
Vergleichen (S42) der Länge des Quellendateipfads mit der Länge des Dateipfads einer ausgewählten der mehreren Dateien,
Festlegen (S43, S44) der Größe des kürzeren des Quellendateipfads oder des Dateipfads der ausgewählten Datei als Größe des Prüfpfads,
Festlegen (S45) von Zeichengewinnungszeigern zum Gewinnen von Zeichen für einen Vergleich am Ende des jeweiligen Quellendateipfads und Dateipfads der ausgewählten Datei,
Zurücksetzen (S46) eines Beurteilungszählers zum Zählen der Anzahl, mit der aus den entsprechenden Dateipfaden genommene Zeichen zusammenpassen,
Gewinnen (S47, S48) eines Zeichens vom Ende des Quellendateipfads und eines Zeichens vom Ende des Dateipfads der ausgewählten Datei,
Vergleichen der gewonnenen Zeichen und Beurteilen (S49), ob die beiden Zeichen zusammenpassen, und Erhöhen (S50) des Beurteilungszählers, wenn beurteilt wird, dass die beiden Zeichen zusammenpassen,
Beurteilen (S50), ob die Anzahl zwischen den Dateipfaden verglichener Zeichen gleich der Größe des festgelegten Prüfpfads ist,
wenn die Anzahl an zwischen den Dateipfaden verglichenen Zeichen nicht gleich der Größe des festgelegten Prüfpfads ist, Verschieben der Gewinnungszeiger zum nächsten Zeichen und Wiederholen (S52) der obigen Schritte zum Gewinnen, Vergleichen und Beurteilen,
wenn die Anzahl der verglichenen Zeichen gleich der Größe des festgelegten Prüfpfads ist, Vergleichen (S53) des Zählwerts des Beurteilungszählers und der Zeichenkettenzahl,
wenn der Beurteilungszähler-Zählwert gleich oder größer der Zeichenkettenzahl ist, Feststellen, dass die gewählte Datei zur Quellendatei passt und Festlegen (S54) der Zugriffskontrolllisteninformationen für die ausgewählte Datei aufgrund der für die Übertragungsziel-Quellendatei festgelegten Zugriffskontrolle, und
Wiederholen (S55) der obigen Unterschritte für jede der genannten Vielzahl an Dateien.

## Revendications

1. Système de partage de fichiers, comportant :
un dispositif de partage de fichiers de source de transfert (10) ayant un premier système d'exploitation (11),
un dispositif de partage de fichiers de destination de transfert (40) ayant un second système d'exploitation (41) et qui est connecté en communication audit dispositif de partage de fichiers de source de transfert (10),
des moyens de sélection pour sélectionner au moins un ou plusieurs fichiers (21) conservés dans le dispositif de partage de fichiers de source de transfert (10),
des moyens d'examen de fichiers (12) pour acquérir des informations caractéristiques (30) sur le ou les fichiers sélectionnés,
des moyens de transfert de fichiers pour transférer le ou les fichiers sélectionnés et lesdites informations caractéristiques (30) vers le dispositif de partage de fichiers de destination de transfert (40), dans lequel :
le système est conçu pour transférer des informations caractéristiques contenues dans un fichier séparé (30) vers le ou les fichiers auxquels les informations caractéristiques se rattachent, et
le second système d'exploitation est différent dudit premier système d'exploitation, **caractérisé en ce que** :
le système comporte en outre des moyens de spécification de fichiers (424) pour spécifier le ou les fichiers transférés vers le dispositif de partage de fichiers de destination de transfert en mettant en correspondance chaque fichier transféré (S1) avec ses informations caractéristiques respectives, dans lequel :
les moyens d'examen de fichiers (12) sont conçus pour acquérir des informations caractéristiques (30) incluant d'autres informations d'attributs, lesquelles sont l'une parmi un nom de fichier, une taille de fichier, une date et une heure de mise à jour ou des informations de trajet de fichier, concernant le ou les fichiers sélectionnés et des informations d'identité indiquant une identité de fichier qui est obtenue par un traitement des données du ou des fichiers sélectionnés par l'intermédiaire d'une fonction prédéterminée,
lorsqu'ils sont incapables de spécifier ledit fichier par l'intermédiaire des autres informations d'attributs incluses dans les informations caractéristiques, les moyens de spécification de fichiers (424) sont conçus pour spécifier le fichier en utilisant la fonction prédéterminée pour générer les informations d'identité et ensuite pour comparer les informations d'identité générées aux informations d'identité incluses dans les informations caractéristiques, et
lorsqu'ils sont incapables de spécifier ledit fichier par l'intermédiaire des informations d'identité, les moyens de spécification de fichiers (424) sont conçus pour déterminer la similitude entre des informations de trajet de fichier du dispositif de partage de fichiers de source de transfert et des informations de trajet de fichier du dispositif de partage de fichiers de destination de transfert, en comparant des parties des trajets de fichiers, et spécifient ensuite le fichier sur la base de cette similitude.

2. Système de partage de fichiers selon la revendication 1, dans lequel le dispositif de fichiers de destination de transfert (40) comporte des moyens de restauration d'attributs (425) pour acquérir des informations caractéristiques incluant des informations d'attributs prédéterminées concernant le ou les fichiers sélectionnés et pour associer les informations d'attributs prédéterminées incluses dans les informations caractéristiques avec le ou les fichiers spécifiés par les moyens de spécification de fichiers (424).

3. Système de partage de fichiers selon la revendication 2, dans lequel les informations d'attributs prédéterminées sont des informations de commande d'accès concernant le ou les fichiers sélectionnés.

4. Système de partage de fichiers selon l'une quelconque des revendications 1 à 3, dans lequel lorsque les moyens de spécification de fichiers (424) déterminent la similitude entre des informations de trajet de fichier du dispositif de partage de fichiers de source de transfert et des informations de trajet de fichier du dispositif de partage de fichiers de destination de transfert, cette détermination est effectuée en mettant l'accent sur les informations d'ordre inférieur des informations de trajet de fichier.

5. Procédé pour transférer des fichiers entre des dispositifs de partage de fichiers (10,40), dans lequel les dispositifs de partage de fichiers ont des système d'exploitation (11,41) différents, le procédé comportant les étapes consistant à :
sélectionner (S1) au moins un ou plusieurs fichiers (21) à transférer depuis un dispositif de partage de fichiers de source de transfert (10),
acquérir (S2) des informations caractéristiques incluant des informations d'attributs prédéterminées concernant le ou les fichiers sélectionnés,
transférer (S3) le ou les fichiers sélectionnés vers le dispositif de partage de fichiers de destination de transfert (40), et
transférer (S5) dans un fichier séparé les informations caractéristiques (30) acquises concernant lesdits fichiers sélectionnés, **caractérisé en ce que** :
lesdites informations caractéristiques incluent d'autres informations d'attributs, lesquelles sont l'une parmi un nom de fichier, une taille de fichier, une date et une heure de mise à jour ou des informations de trajet de fichier, concernant le ou les fichiers sélectionnés et des informations d'identité indiquant une identité de fichier qui est obtenue par un traitement de données du ou des fichiers sélectionnés par l'intermédiaire d'une fonction prédéterminée, et
le procédé comporte en outre des étapes consistant à :
spécifier (S7) le ou les fichiers transférés vers le dispositif de partage de fichiers de destination de transfert sur la base des informations caractéristiques acquises (30),
associer (S7) les informations d'attributs prédéterminées incluses dans les informations caractéristiques avec le ou les fichiers spécifiés,
lorsqu'il est incapable de spécifier ledit fichier par l'intermédiaire des autres informations d'attributs incluses dans les informations caractéristiques, spécifier le fichier en utilisant la fonction prédéterminée pour générer les informations d'identité (30) et comparer ensuite les informations d'identité générées aux informations d'identité incluses dans les informations caractéristiques, et
lorsqu'il est incapable de spécifier ledit fichier par l'intermédiaire des informations d'identité, déterminer la similitude entre des informations de trajet de fichier du dispositif de partage de fichiers de source de transfert et des informations de trajet de fichier du dispositif de partage de fichiers de destination de transfert, en comparant des parties des trajets de fichiers, et spécifier ensuite le fichier sur la base de cette similitude.

6. Procédé selon la revendication 5, incluant les étapes supplémentaires consistant à :
acquérir (S21) le nom d'un répertoire transféré,
lire (S22) les informations d'identité générées (30),
acquérir (S23) des informations de répertoire de destination de transfert,
définir (S24), sur la base des informations sur le répertoire cible de transfert et desdites informations de répertoire de destination de transfert, une plage de recherche,
acquérir (S25) un enregistrement unique de données à partir des informations d'identité,
sur la base des informations caractéristiques générales dans ledit enregistrement, effectuer (S26) une recherche pour des fichiers dans la plage définie ayant des informations caractéristiques identiques auxdites informations caractéristiques générales dans ledit enregistrement,
déterminer (S29) si une pluralité de fichiers sont trouvés lors de ladite recherche,
lorsque uniquement un fichier est trouvé lors de ladite recherche, définir (330) les informations de liste de commandes d'accès pour ledit fichier sur la base de la commande d'accès définie pour le fichier source cible de transfert,
lorsque une pluralité de fichiers sont trouvés lors de ladite recherche :
calculer (S31) une empreinte numérique pour chacun des fichiers récupérés,
déterminer (S32) si uniquement un fichier trouvé lors de ladite recherche a la même empreinte numérique que l'empreinte numérique du fichier source cible de transfert,
lorsque uniquement un seul fichier trouvé lors de ladite recherche est déterminé comme ayant la même empreinte numérique que l'empreinte numérique du fichier source cible de transfert, définir (S33) les informations de liste de commandes d'accès pour ledit fichier sur la base de la commande d'accès définie pour le fichier source cible de transfert,
lorsque une pluralité de fichiers sont déterminés comme ayant la même empreinte numérique que l'empreinte numérique du fichier source cible de transfert, spécifier (S34) un fichier d'objet unique parmi ladite pluralité de fichiers en comparant les informations de trajet de fichier source indiquées par les informations d'identité et les informations de trajet de fichier de chaque fichier parmi ladite pluralité de fichiers,
répéter (S36) les étapes ci-dessus jusqu'à ce que tous les fichiers cible de transfert aient été spécifiés.

7. Procédé selon la revendication 6 dans lequel ladite étape de spécification (S34) en comparant les informations de trajet de fichier source indiquées par les informations d'identité et les informations de trajet de fichier de chaque fichier parmi ladite pluralité de fichiers inclut les sous-étapes consistant à :
définir (S41) un nombre de chaînes de caractères, qui est une valeur de détermination pour déterminer que le trajet de fichier est similaire,
comparer (S42) la longueur du trajet de fichier source à la longueur du trajet de fichier d'un fichier sélectionné parmi ladite pluralité de fichiers,
définir (S43,S44) en tant que taille du trajet d'examen la taille de la plus courte longueur entre la longueur du trajet de fichier source et la longueur du trajet de fichier dudit fichier sélectionné,
définir (S45) des pointeurs d'acquisition de caractères pour acquérir des caractères en vue d'une comparaison à la fin de chacun du trajet de fichier source et du trajet de fichier dudit fichier sélectionné,
réinitialiser (S46) un compteur de détermination pour compter le nombre de fois que des caractères extraits des trajets de fichiers respectifs coïncident,
acquérir (S47, S48) un caractère depuis la fin du trajet du fichier source et un caractère depuis la fin du trajet de fichier dudit fichier sélectionné,
comparer lesdits caractères acquis et déterminer (S49) si les deux caractères coïncident et, s'il est déterminé que les deux caractères coïncident, incrémenter (S50) le compteur de détermination,
déterminer (S50) si le nombre de caractères comparé entre lesdits trajets de fichiers est égal à la taille du trajet d'examen défini,
lorsque le nombre de caractères comparé entre lesdits trajets de fichier n'est pas égal à la taille du trajet d'examen défini, décaler les pointeurs d'acquisition vers le caractère suivant et répéter (S52) les étapes d'acquisition, de comparaison et de détermination ci-dessus,
lorsque le nombre de caractères comparé est égal à la taille du trajet d'examen défini, comparer (S53) la valeur de compte du compteur de détermination et le nombre de chaînes de caractères,
lorsque la valeur de compte du compteur de détermination est égale au nombre de chaîne de caractères ou supérieure à celui-ci, déterminer que le fichier sélectionné coïncide avec le fichier source, et définir (S54) les informations de liste de commandes d'accès pour ledit fichier sélectionné sur la base de la commande d'accès définie pour le fichier source cible de transfert,
répéter (S54) les sous-étapes ci-dessus pour chaque fichier parmi ladite pluralité de fichiers.
